# EUROPÄISCHE PATENTSCHRIFT

(11) **EP 1 127 747 B1**
(45) Veröffentlichungstag und Bekanntmachung des Hinweises auf die Patenterteilung: **07.01.2004**
(21) Anmeldenummer: 01101479.2
(22) Anmeldetag: 24.01.2001
(51) Int. Cl.: B60R 11/02

(54) **Multimediaeinrichtung für ein Fahrzeug**
Multi-media equipment for a vehicle
Equipement multimédia pour un véhicule

(30) Priorität: 22.02.2000 DE 10008092
(43) Veröffentlichungstag der Anmeldung: 29.08.2001
(73) Patentinhaber: BECKER GmbH, D-76307 Karlsbad (DE)
(72) Erfinder: Karl, Alois, 75196 Remchingen (DE); Kohl, Wolfram, 75120 Keltern (DE); Wietzke, Joachim, Dr., 76228 Karlsruhe (DE); Raab, Martin, 76307 Karlsbad (DE)
(74) Vertreter: Patentanwälte Westphal, Mussgnug & Partner

(56) Entgegenhaltungen:
- WO-A-00/38951
- DE-A- 4 002 241
- US-A- 4 087 126
- US-A- 5 836 496
- PATENT ABSTRACTS OF JAPAN vol. 015, no. 318 (M-1146), 14. August 1991 (1991-08-14) & JP 03 118251 A (AISIN SEIKI CO LTD), 20. Mai 1991 (1991-05-20)

## Beschreibung

Die Erfindung betrifft eine Multimediaeinrichtung mit einem Multimediagerät für ein Fahrzeug.

Zu einer Multimediaeinrichtung kann beispielsweise ein Multimediagerät mit einem Multimediaspieler gehören, der zum Abspielen einer CD oder einer DVD geeignet ist. Bei einem Heimgerät gestaltet sich die Bedienung eines derartigen Plattenspielers verhältnismäßig einfach. Dagegen ist die Bedienung eines Multimediaplattenspielers in einem Fahrzeug wegen der beengenden Raumverhältnisse etwas schwierig. Außerdem läßt sich der Multimediaspieler meist nur von einem Sitzplatz aus bedienen.

So beschreibt die US-A 4,087,126, die den Oberbegriff des Anspruchs 1 zeigt, beispielsweise die Anordnung eines FM-Radios, einer CB-Funkgerätes oder eines sonstigen elektronischen Gerätes in einer aufklappbaren Mittelkonsole eines Kraftfahrzeuges.

Fernerhin beschreibt die nachveröffentlichte WO 00/38951 die ausklappbare Anordnung eines Video Display Systems im Deckenbereich eines Kraftfahrzeugs. Auch dieses System lässt sich nur von den vorderen Sitzplätzen aus bedienen.

Es ist daher Aufgabe der Erfindung, eine Multimediaeinrichtung für ein Fahrzeug so zu gestalten, dass sie einfach und möglichst von allen Sitzplätzen aus bedienbar ist.

Die Erfindung löst diese Aufgabe mit den im Anspruch 1 angegebenen Merkmalen dadurch, dass im Multimediagerät eine Ausnehmung zur Aufnahme des Multimediaspielers mit einer Frontladeseite zum Be- und Entladen mit einem Aufzeichnungsträger angeordnet ist, dass der Multimediaspieler an seiner Rückseite schwenkbar in der Ausnehmung befestigt ist, so dass er um einen Winkel von 180°aus der Ausnehmung schwenkbar ist.

Vorzugsweise ist das Multimediagerät in der Mittelkonsole oder zwischen den Vordersitzen des Fahrzeugs angeordnet.

Der Multimediaspieler ist beispielsweise an seiner Rückseite mittels einer Achse schwenkbar in der Ausnehmung des Multimediagerätes befestigt. Er kann deshalb aus dem Multimediagerät geschwenkt werden. Die Rückseite des Multimediaspielers kann beispielsweise an der Vorderseite der Ausnehmung befestigt sein. Bei dieser Ausführung kann der Multimediaspieler vom Rücksitz aus bedient werden, wenn er um einen Winkel, der kleiner als 90° ist, aus der Ausnehmung geschwenkt wird. Wird der Multimediaspieler um einen Winkel von bis 180° aus der Ausnehmung geschwenkt, so läßt er sich bequem vom Fahrersitz oder vom Beifahrersitz aus bedienen..

Alternativ hierzu kann die Rückseite des Multimediaspielers auch an der Rückseite der Ausnehmung des Multimediagerätes befestigt sein. Bei dieser Ausführungsform läßt sich der Multimediaspieler bequem von den Vordersitzen aus bedienen, wenn er um einen Winkel von bis zu 90° aus der Ausnehmung geschwenkt wird. Wird er um einen größeren Winkel - bis etwa 180° - aus der Ausnehmung geschwenkt, so kann er bequem von den Rücksitzen aus bedient werden.

Es lassen sich daher bequem von allen Sitzen des Fahrzeuges aus Aufzeichnungsträger, z. B. eine CD, in den Multimediaspieler einlegen und aus dem Multimediaspieler wieder entnehmen.

Eine Ausgestaltung der Erfindung sieht ein erstes Bedienteil für das Multimediagerät und gegebenenfalls für weitere Geräte vor, das in der Nähe des Schalthebels des Fahrzeuges angeordnet ist. Beispielsweise kann das erste Bedienteil hinter dem Schalthebel oder am Schalthebel angeordnet sein.

Eine weitere Ausgestaltung der Erfindung sieht ein zweites Bedienteil für das Multimediagerät und gegebenenfalls für weitere Geräte vor, das in einer Armlehne der Rücksitze oder der Rücksitzbank angeordnet ist.

Die Erfindung hat deshalb den Vorteil, dass von allen Sitzen aus das Multimediagerät sowohl bedienbar als auch mit Aufzeichnungsträgern bestückbar ist.

Eine weitere Ausgestaltung der Erfindung sieht Bildschirme im Armaturenbrett und in den Rückenlehnen der Vordersitze vor, so dass jeder Fahrzeuginsasse gewissermaßen fernsehen kann.
Die Erfindung wird nun anhand der Figuren näher beschrieben und erläutert.

In der Zeichnung zeigen:
- Figur 1: ein Multimediagerät mit darin versenktem Multimediaspieler in perspektivischer Darstellung,
- Figur 2: einen Längsschnitt durch das Multimediagerät mit ausgeschwenktem Multimediaspieler in einer ersten Position,
- Figur 3: einen Längsschnitt durch das Multimediagerät mit ausgeschwenktem Multimediaspieler in einer zweiten Position und
- Figur 4: die Frontseite eines Bedienteils.

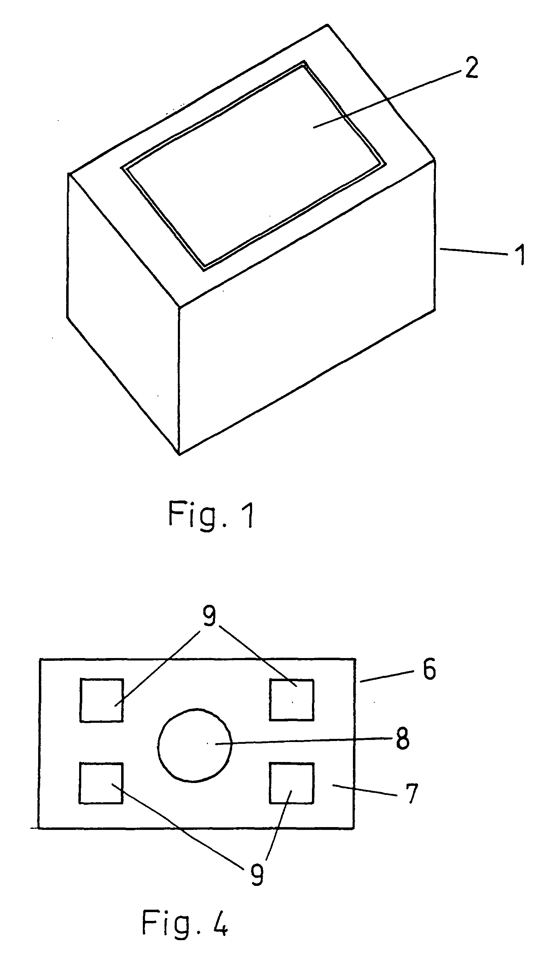

In der Figur 1 ist das Multimediagerät 1 des Fahrzeuges mit dem in der Ausnehmung 3 versenkten Multimediaspieler 2 in perspektivischer Darstellung gezeigt.

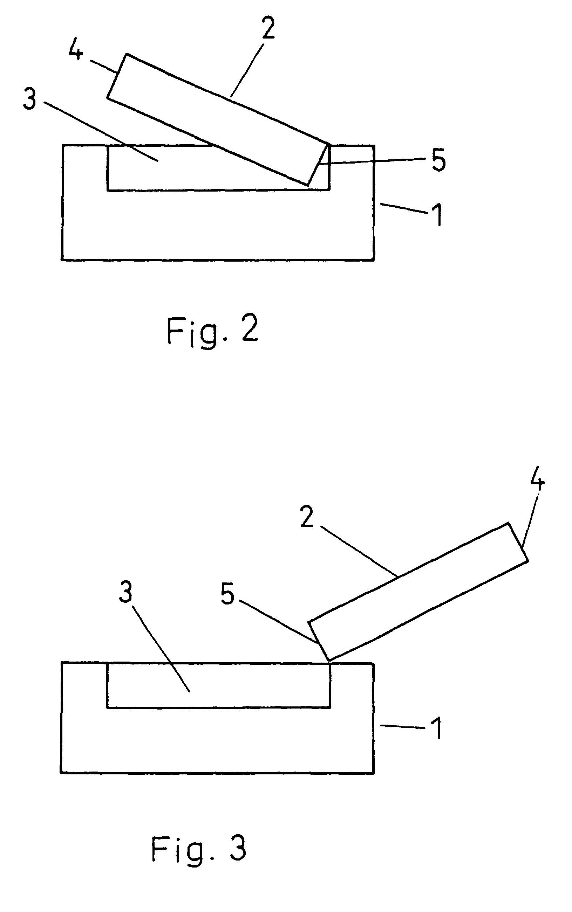

Figur 2 zeigt einen Längsschnitt durch das Multimediagerät 1 mit ausgeschwenktem Multimediaspieler 2. Der Multimediaspieler 2 ist um einen Winkel von etwa 30° aus dem Multimediagerät 1 geschwenkt. Die Frontseite 4 weist z. B. zu den Rücksitzen. Der Multimediaspieler 2 kann zurück in die Ausnehmung 3 geschwenkt werden oder - wie in der Figur 3 gezeigt ist - noch weiter ausgeschwenkt werden bis zu einem Winkel von annähernd 180°. In dieser Position ist die Frontseite 4 des Multimediaspielers 2 bequem von den Vordersitzen aus bedienbar. Die Rückseite 5 des Multimediagerätes 2 ist schwenkbar an der Vorderseite der Ausnehmung 3 befestigt. Sie kann aber auch an der Rückseite der Ausnehmung 3 befestigt sein.

Eine Ausgestaltung der Erfindung sieht vor, dass der Multimediaspieler 2 in Rastpositionen positionierbar ist. Es kann sich hierbei um eine stufenlose Rasterung oder eine Rasterung in Schritten von z. B. 10° handeln.

Zur Bedienung des Multimediaspielers 2 können auf seiner Frontladeseite 4 mehrere Tasten und Drehknöpfe angeordnet sein.

In der Figur 4 ist die Frontseite 7 eines Bedienteils 6 gezeigt, mittels dem das Multimediagerät und gegebenenfalls noch weitere Geräte bedienbar sind. Zur Bedienung sind auf der Frontseite 7 mehrere Tasten 9 sowie mindestens ein Drehknopf 8 angeordnet.

Vorzugsweise ist das Multimediagerät in der Mittelkonsole oder zwischen den Vordersitzen des Fahrzeugs angeordnet.

Wie bereits erwähnt ist ein erstes Bedienteil in der Nähe des Schalthebels und ein zweites Bedienteil in der Armlehne des Rücksitzes angeordnet.

Durch die erfindungsgemäße Maßnahme, den Multimediaspieler um 180° schwenkbar zu gestalten, kann er von allen Sitzen aus bequem mit einem Aufzeichnungsträger bestückt werden. Durch die weitere Maßnahme, in der Nähe des Schalthebels und an der Armlehne des Rücksitzes je ein Bedienteil vorzusehen, wird eine bequeme von allen Sitzen aus durchführbare und dennoch umfangreiche Bedienung des Multimediagerätes und gegebenenfalls anderer Geräte ermöglicht.

Die Erfindung ist insbesondere zum Einbau in einen Personenkraftwagen oder einen Omnibus geeignet.

### Bezugszeichenliste

- 1: Multimediagerät
- 2: Multimediaspieler
- 3: Ausnehmung
- 4: Frontladeseite des Multimediaspielers
- 5: Rückseite des Multimediaspielers
- 6: Bedienteil
- 7: Frontseite des Bedienteils
- 8: Drehknopf
- 9: Tasten

## Patentansprüche

1. Multimediaeinrichtung mit einem Multimediagerät (1) für ein Fahrzeug, wobei im Multimediagerät (1) eine Ausnehmung (3) zur Aufnahme eines Multimediaspielers (2) mit einer Frontladeseite (4) zum Be- und Entladen mit einem Aufzeichnungsträger angeordnet ist, wobei der Multimediaspieler (2) an seiner Rückseite (5) schwenkbar in der Ausnehmung (3) befestigt ist,
**dadurch gekennzeichnet, dass** er um einen Winkel von 180° aus der Ausnehmung (3) schwenkbar ist.

2. Multimediaeinrichtung nach Anspruch 1,
**dadurch gekennzeichnet, dass** der Multimediaspieler (2) vollständig in der Ausnehmung (3) versenkbar ist.

3. Multimediaeinrichtung nach Anspruch 1 oder 2,
**dadurch gekennzeichnet, dass** für das Schwenken des Multimediaspielers (2) Rastpositionen vorgesehen sind.

4. Mulitmediaeinrichtung nach Anspruch 1, 2 oder 3,
**dadurch gekennzeichnet, dass** die Rückseite (5) des Multimediaspielers (2) an der Vorder- oder der Rückseite der Ausnehmung (3) schwenkbar befestigt ist.

5. Multimediaeinrichtung nach Anspruch 1, 2, 3 oder 4,
**dadurch gekennzeichnet, dass** zur Bedienung des Multimediaspielers (2) auf seiner Front ladeseite (4) Tasten und/oder Drehknöpfe angeordnet sind.

6. Multimediaeinrichtung nach einem der Ansprüche 1 bis 5,
**dadurch gekennzeichnet, dass** ein erstes Bedienteil (6) für das Multimediagerät (1) und/oder den Multimediaspieler (2) und gegebenenfalls für weitere Geräte vorgesehen ist, welches in der Nähe des Schalthebels oder am Schalthebel des Fahrzeuges angeordnet ist.

7. Multimediaeinrichtung nach einem der Ansprüche 1 bis 6,
**dadurch gekennzeichnet, dass** ein zweites Bedienteil (6) für das Multimediagerät (1) und/oder den Multimediaspieler (2) und gegebenenfalls für weitere Geräte vorgesehen ist, welches in einer Armlehne des Rücksitzes oder der Rücksitzbank des Fahrzeugs angeordnet ist.

8. Multimediaeinrichtung nach Anspruch 6 oder 7,
**dadurch gekennzeichnet, dass** auf der Frontseite (7) der Bedienteile (6) mindestens ein Drehknopf (8) und mehrere Tasten (9) angeordnet sind.

9. Multimediaeinrichtung nach einem der Ansprüche 1 bis 8,
**dadurch gekennzeichnet, dass** Monitore vorgesehen sind, welche im Armaturenbrett und/oder in den Rückenlehnen der Vordersitze angeordnet sind.

10. Multimediaeinrichtung nach einem der Ansprüche 1 bis 9,
**dadurch gekennzeichnet, dass** es sich bei dem Multimediagerät (2) um einen CD-, einen CD-ROM- oder um einen DVD-Spieler handelt.

11. Multimediaeinrichtung nach einem der Ansprüche 1 - 10,
**dadurch gekennzeichnet, dass** das Multimediagerät (1) derart ausgebildet ist, dass es in der Mittelkonsole oder zwischen den Vordersitzen des Fahrzeugs anordbar ist.

## Claims

1. Multimedia equipment having a multimedia device (1) for a vehicle, a recess (3) being arranged in the multimedia device (1) to accommodate a multimedia player (2) having a front loading side (4) for loading and unloading a recording medium, the multimedia player (2) being attached, at its rear side (5), in the recess (3) in a manner such that it can pivot, **characterized in that** it can pivot out of the recess (3) by an angle of 180°.

2. Multimedia equipment according to Claim 1, **characterized in that** the multimedia player (2) can be completely lowered into the recess (3).

3. Multimedia equipment according to Claim 1 or 2, **characterized in that** latching positions are provided for the pivoting of the multimedia player (2).

4. Multimedia equipment according to Claim 1, 2 or 3, **characterized in that** the rear side (5) of the multimedia player (2) is attached to the front or rear side of the recess (3) in a manner such that it can pivot.

5. Multimedia equipment according to Claim 1, 2, 3 or 4, **characterized in that** buttons and/or rotary knobs are arranged on the front loading side (4) of the multimedia player (2) for the operation of the latter.

6. Multimedia equipment according to one of Claims 1 to 5, **characterized in that** a first operating part (6) is provided for the multimedia device (1) and/or the multimedia player (2) and where appropriate for other devices, which first operating part (6) is arranged in the vicinity of the gear lever or on the gear lever of the vehicle.

7. Multimedia equipment according to one of Claims 1 to 6, **characterized in that** a second operating part (6) is provided for the multimedia device (1) and/or the multimedia player (2) and where appropriate for other devices, which second operating part (6) is arranged in an armrest of the rear seat or in the rear seat bench of the vehicle.

8. Multimedia equipment according to Claim 6 or 7, **characterized in that** at least one rotary knob (8) and a number of buttons (9) are arranged on the front side (7) of the operating parts (6) .

9. Multimedia equipment according to one of Claims 1 to 8, **characterized in that** monitors are provided, which monitors are arranged in the dashboard and/or in the backrests of the front seats.

10. Multimedia equipment according to one of Claims 1 to 9, **characterized in that** the multimedia device (1) is a CD player, a CD-ROM player or a DVD player.

11. Multimedia equipment according to one of Claims 1 to 10, **characterized in that** the multimedia device (1) is designed such that it can be arranged in the centre of the dashboard or between the front seats of the vehicle.

## Revendications

1. Equipement multimédia muni d'un appareil multimédia (1) pour un véhicule, un évidement (3) étant ménagé dans l'appareil multimédia (1) pour recevoir un lecteur multimédia (2) ayant un côté de chargement frontal (4) pour le chargement et le déchargement à l'aide d'un support d'enregistrement, le lecteur multimédia (2) étant fixé dans l'évidement (3) de manière pivotante au niveau de son côté arrière (5),
**caractérisé en ce que**
le lecteur peut pivoter hors de l'évidement (3) sur un angle de 180°.

2. Equipement multimédia selon la revendication 1,
**caractérisé en ce que**
le lecteur multimédia (2) peut être complètement encastré dans l'évidement (3).

3. Equipement multimédia selon la revendication 1 ou 2,
**caractérisé en ce que**
des positions d'encliquetage sont prévues pour le pivotement du lecteur multimédia (2).

4. Equipement multimédia selon la revendication 1, 2 ou 3,
**caractérisé en ce que**
le côté arrière (5) du lecteur multimédia (2) est fixé de manière pivotante au niveau du côté avant ou arrière de l'évidement (3).

5. Equipement multimédia selon la revendication 1, 2, 3 ou 4,
**caractérisé en ce que**
pour pouvoir utiliser le lecteur multimédia (2), des touches et/ou des boutons tournants sont prévus sur son côté de chargement frontal (4).

6. Equipement multimédia selon l'une quelconque des revendications 1 à 5,
**caractérisé en ce qu'**
un premier élément de commande (6) prévu pour l'appareil multimédia (1) et/ou le lecteur multimédia (2) et éventuellement pour d'autres appareils, est disposé dans le voisinage du levier de vitesse ou sur le levier de vitesse du véhicule.

7. Equipement multimédia selon l'une quelconque des revendications 1 à 6,
**caractérisé en ce qu'**
un second élément de commande (6) prévu pour l'appareil multimédia (1) et/ou le lecteur multimédia (2) et éventuellement pour d'autres appareils, est disposé dans un accoudoir du siège arrière ou de la banquette arrière du véhicule.

8. Equipement multimédia selon la revendication 6 ou 7,
**caractérisé en ce que**
sur le côté frontal (7) des éléments de commande (6), au moins un bouton tournant (8) et plusieurs touches (9) sont prévus.

9. Equipement multimédia selon l'une quelconque des revendications 1 à 8,
**caractérisé en ce que**
des moniteurs sont disposés dans le tableau de bord et/ou dans les dossiers des sièges avant.

10. Equipement multimédia selon l'une quelconque des revendications 1 à 9,
**caractérisé en ce que**
le lecteur multimédia (2), est un lecteur de CD, de CD-ROM ou un lecteur de DVD.

11. Equipement multimédia selon l'une quelconque des revendications 1 à 10,
**caractérisé en ce que**
l'appareil multimédia (1) est réalisé de telle sorte qu'il peut être disposé dans la console centrale ou entre les sièges avant du véhicule.
